# EUROPEAN PATENT SPECIFICATION

(11) **EP 2 761 159 B1**
(45) Date of publication and mention of the grant of the patent: **25.12.2019**
(21) Application number: 12746403.0
(22) Date of filing: 05.07.2012
(51) Int. Cl.: F02K 9/64, F02K 9/68, F02K 9/72

(54) **PROPULSION SYSTEM**
SCHUBSYSTEM
SYSTÈME DE PROPULSION

(30) Priority: 29.09.2011 PT 10591211
(43) Date of publication of application: 06.08.2014
(73) Proprietor: Omnidea, Lda., 3510-017 Viseu (PT)
(72) Inventor: COSTA DUARTE PARDAL, Tiago, 2825-041 Vila Nova da Caparica (PT)
(74) Representative: Pereira da Cruz, Joao
(86) International application number: PCT/PT2012/000027
(87) International publication number: WO 2013/048271

(56) References cited:
- US-A- 2 408 111
- US-A- 3 178 885
- US-A- 3 295 323
- US-A- 4 132 165
- US-A- 5 099 645
- US-B1- 6 231 008

## Description

### Field of the invention

The present invention pertains to the domains of mechanical and aerospace engineering, more specifically to chemical propulsion systems. It consists generally of a chemical propulsion system which uses at least one liquid reactant which is pressurized and vaporized for injection into the reaction chamber by heating, with the source of heat being the heat flux mainly through the nozzle wall.

### Cited documents

Patent US 3178885

### Background

Current hybrid and liquid rockets have a very high degree of complexity of associated systems and subsystems. This high degree of complexity comes with a greater system mass and reliability issues.

For the case of hybrid rockets, the pressurization of the liquid component is made by a pressurizing compound stored in a secondary tank which is allowed to expand into the tank of the liquid reactant, forcing it out through the injector and into the reaction chamber. This design requires the extra tank and the pressurizing compound, as well as associated valves and control systems. Additional devices, such as diaphragms and bellows are also required in order to avoid contamination of the reactant by the pressurizing substance, as well as active components, such as pistons, that are required to force the pressurizing compound out of its tank and into the feeding systems.

The cited patent US3178885 (concerning hybrid rocket motors) presents another complex solution to the problem of pressurizing the liquid reactant. In it, a system is described that includes an auxiliary gas generator which comprises a separate smaller secondary grain of fuel, which is impregnated with oxidizer (called a "grain of propellant" by the patent's author). This grain of propellant is ignited by a heater and the hot gaseous reaction products of this reaction are used to vaporize, pressurize and heat the liquid oxidizer that is then fed into the main chamber.

For the case of liquid rocket motors (liquid oxidizer and liquid fuel), the liquid components need to be fed to the reaction chamber and vaporized or atomized. Spray nozzles and turbopumps are usually required for both the fuel and oxidizer. The turbopumps used are complex systems which require costly and rigorous maintenance in order to maintain an acceptable level of reliability.

### Disclosure of the invention

The present invention offers an improved constructive solution for chemical propulsion systems in which at least one of the reactants is stored in the fluid phase, with expected gains in reliability, overall performance and cost.

Specifically, the invention is centred around means and devices to deliver in gaseous phase to a reaction chamber (also known as combustion chamber), reactants (i.e: propellants) that are stored in a fluid phase (liquid or gaseous) in a reservoir (tank or vessel), using mostly or solely as energy input for the vaporization and pressurization of the reactant, the waste heat that is removed from said reaction chamber and or other components (such as a nozzle) in operation.

The complex feeding mechanisms described in the state of the art are replaced by a heat transfer device which, in the simplest embodiments of the invention, can be only a wall separating the reactant tanks from the reaction chamber and/or nozzle, with the heat transfer necessary for vaporizing the reactant being conducted through said wall.

In the case of hybrid motors (both liquid and solid propellants) the present invention allows for a system without a separate tank for a pressurizing substance, while in the case of liquid propellant motors, either, the turbo-pumps or the pressurizing gas and vessel, will no longer be necessary. The fact that only the gaseous phase of the reactant is fed to the reaction chamber means that injectors, atomizers or similar devices are not required in the reaction chamber and also a higher range of throttability is possible since tiny droplets of liquid do not have to be produced(i.e: atomized liquid spray).

The technological simplification leads to lighter (lower mass) motors that are also cheaper to manufacture due to less complexity and lower costs with quality control.

The feeding of reactant in gaseous phase can also improve the reaction process and increase overall efficiency of the system. Furthermore the fact that the heat transfer through the nozzle and/or chamber walls is being used in the propulsion system and not just wasted also implies an increase in efficiency.

### Brief description of the drawings

**Figure 1** shows a schematic drawing of an embodiment of the invention in which it is configured as a hybrid rocket motor.
**Figure 2** shows a schematic drawing of an embodiment of the invention in which it is configured as a liquid rocket motor.
**Figure 3** shows a schematic drawing of an exemplary embodiment not forming part of the invention in which it is configured as a hybrid rocket motor and has a separate closed-circuit heat transfer apparatus to perform the heat transfer from the nozzle and reaction chamber to the reservoirs.
**Figure 4** shows a schematic drawing of an exemplary embodiment not forming part of the invention in which it is configured as a hybrid rocket motor, with the reaction chamber and part of the nozzle immersed in the liquid reactant reservoir.
**Figure 5** shows a schematic drawing of an exemplary embodiment not forming part of the invention in which it is configured as a hybrid rocket motor and uses smaller high-pressure reservoirs to feed the reactant to the reaction chamber instead of using a large volume, low-pressure reservoir directly.

### Description of some embodiments of the invention

All the embodiments of the invention have in common the following elements: a reaction chamber (1), where a chemical reaction takes place, a nozzle (2), which is common to most chemical propulsion system designs, at least one reservoir (3) for storing at least one reactant (i.e: propellant) in the fluid state, and a feeding system which includes piping and optionally a combination of valves (4) and pressure regulating devices. One example of such devices could be, for instance, in propulsion systems for a single time use with no additional re-ignitions, diaphragm(s) that bursts at the designated pressure to start the gaseous propellant injection. Such diaphragm may, when bursting, combine a small amount of a hypergolic mixture that would start the propulsion system ignition.

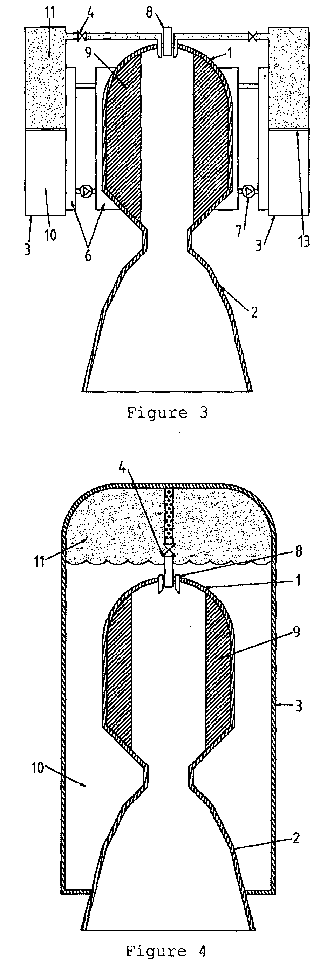

An illustrative embodiment is depicted in Figure 4. The figure presents a bi-propellant, hybrid rocket configuration in which one of the propellant reactants is solid and is stored in the reaction chamber (1) as a solid grain (9), while the other is liquid and is stored in a reservoir (3). The reaction chamber (1) and part of the nozzle (2) are contained inside the reservoir (3) and surrounded by reactant in liquid phase (10). During operation, the reactant is heated by the reaction chamber (1) and/or nozzle (2) and changes to the gaseous phase (11). The gaseous reactant (11) is fed to the reaction chamber and the flow can be controlled by valves (4) or other devices (not depicted).

When the propellants are not hypergolic, the reaction chamber is also outfitted with an igniter (8) to initiate the reaction. Given that the aforementioned self-pressurization can only occur in operation, it is required that prior to ignition either a certain amount of reactant is already vaporized and pressurized inside the reservoir, or that the reactant is heated by another (external) means.

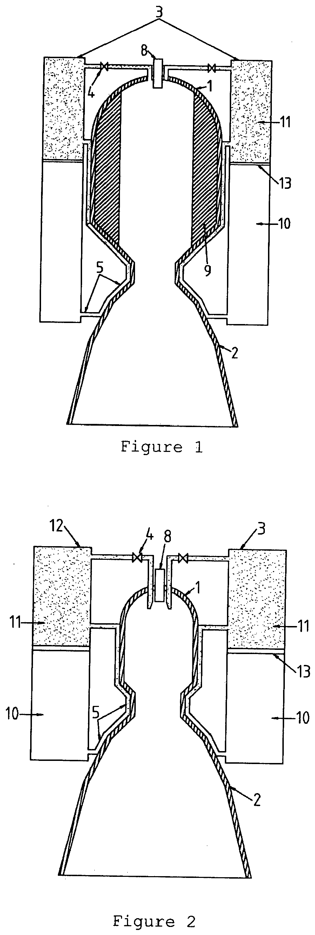

In another embodiment of the present invention (depicted in Figure 1) the reservoir (3) is separate from the reaction chamber (1) and nozzle (2). The propellant fluid reactant (10) flows through a heat exchanger (5) (for example a piping subsystem) which is adjacent to the reaction chamber (1) and nozzle (2), at the same time cooling said reaction chamber (1) and nozzle (2) and being heated and thus increasing vapour pressure. This reactant (11) then goes back to the reservoir and from there it is fed in gaseous form to the reaction chamber (1), where it reacts with a solid grain reactant (or propellant) (9).

In an embodiment, the propulsion system of the present invention comprises a reaction chamber (1) suitable for a chemical reaction to take place, a nozzle (2), at least one reservoir (3) for storage of said at least one fluid reactant, and a feeding system comprising piping, wherein:
- the reservoir (3) is separated from the reaction chamber (1) and nozzle (2);
- the piping comprises a piping subsystem which in turn consists in a heat exchanger (5), suitable for the fluid reactant to flow through and which is so arranged that:
   ∘ it is adjacent to the reaction chamber (1) and nozzle (2), being so arranged that it cools said reaction chamber (1) and nozzle (2) while being heated;
   ∘ the fluid reactant exits it going back to the reservoir (3);
- the reservoir is so arranged that it feeds the reaction chamber (1) with fluid reactant in gaseous form;
- the reaction chamber (1) is suitable for being fed with fluid reactant in gaseous form.

In a detailed configuration of the previous embodiment, it further comprises control valves (4) and an igniter (8), in the reaction chamber.

In a detailed configuration of the previous embodiment, regarding said reservoir being so arranged that it feeds the reaction chamber (1) with fluid reactant in gaseous form, the propulsion system further comprises a separation element (13), suitable for the separation between the gaseous and liquid phases of reactant in the reservoir (3), and which consists in a moving component, suitable for sliding along the reservoir so that a pressure balance between the liquid (10) and gas (11) phases of the fluid reactant are maintained, most probably being a floating membrane or several independent floating elements (for example spheres) that make a layer decreasing contact surface area and heat exchange between phases.

In a configuration alternative to the previously defined for the present embodiment, instead of control valves (4) the propulsion system contains check valves, suitable the control of the flow of the fluid reactant (10) through the heat exchanger adjacent to the reaction chamber (1).

This embodiment may also include control valves (4) and an igniter (8) in the reaction chamber. Additionally, the separation between the gaseous and liquid phases of reactant in the reservoir is made by a separation element (13), which is designed to allow mass transfer, permitting liquid reactant to diffuse to the side of the reservoir containing a liquid phase, as well as reactant that vaporizes in the reservoir to remain in the gas compartment, in order to avoid excessive heat transfer to the liquid phase and thus decrease inertia in overall system reaction making it more independent of total propellant mass and combustion chamber and nozzle size, in fact in this case the gas phase can be at a higher temperature (and thus vapour pressure) than the liquid phase. This separation element (13) is a moving component, which slides along the reservoir to maintain a pressure balance between the liquid (10) and gas (11) phases of the reactant, most probably being a floating membrane or several independent floating elements (for example spheres) that make a layer decreasing contact surface area and heat exchange between phases.

The flow of the fluid reactant (10) through the heat exchanger or piping subsystem (5) adjacent to the reaction chamber (1) and nozzle (2) can also be controlled by check valves and other pressure-regulating devices (not depicted).

Another, similar embodiment of the invention (may be realized as a liquid propellant propulsion system, in which in the case of a bipropellant system (as depicted in Figure 2) both reactants are stored in a liquid state in separate reservoirs (3) and (12). The pressurization means for one or both of the reactants is as described before and the entire embodiment reasoning can also be applied to a liquid mono-propellant propulsion system.

In general, this invention contemplates a propulsion system in which heat is transferred to the reactant or reactants from the nozzle or reaction chamber (or both) by any means viable. Therefore, in some embodiments (such as that depicted in Figure 3) there is a heat transfer subsystem which consists of one or more heat exchangers (6) next to the nozzle (2) and/or reaction chamber (1) and one or more heat exchangers (6) near the reservoir. The two sets of heat exchangers communicate with each other via a secondary piping system in which a fluid circulates, with this circulation regulated by a pump (7), it should be noted that the circulating fluid is not necessarily any of the reactants and may be an independent fluid for the single purpose of circulating in a closed loop in the heat exchangers so that they may operate their function. This third (independent) fluid conveys heat from one set of heat exchangers (6) to the other and, consequently, from the nozzle (2) and reaction chamber (1) to the reservoir (3).

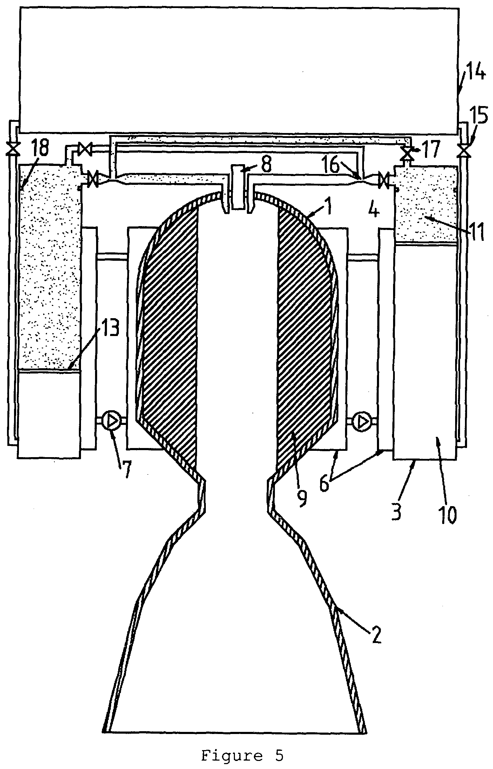

In yet another exemplary embodiment not forming part of the invention (depicted in Figure 5), and to address the problem of a reactant reservoir (i.e: propellant tank) that is capable of withstanding the high pressures at which the reactant is fed to the reaction chamber with its implied high mass and manufacturing complexity, the self-pressurization and feeding can be made in a set of smaller high-pressure reservoirs (3). In this embodiment there is at least one high-volume, low-pressure tank/reservoir (14) which stores most of the liquid propellant/reactant. Connected to this reservoir are at least two smaller, high-pressure reservoirs (3). In operation, these reservoirs are fed with reactant from the large reservoir (14) by means of valves (15) and/or pumps (not depicted). Once a reservoir (3) is full to the nominal level, the connection to the larger reservoir (14) is closed and the smaller reservoir (3) is pressurized by means of the heat exchanging apparatus (in this embodiment, using a set of heat exchangers (6) and pumps (7)) described in the present invention. Once pressurized, the smaller reservoir (3) feeds the reaction chamber (1) through a valve (4). At the same time, to drain the remaining high-pressure reservoir(s) (3) of gaseous reactant before a new feeding and pressurizing cycle can begin, a venturi tube (16) may be used in each of the lines that feed the reaction chamber (1), the low pressure section of said venturi tube (16) being connected to said other reservoir(s) (3). Once depressurized to the venturi, said other reservoir(s) can start a new cycle of filling up, closing of feeding in (with liquid propellant) valve, pressurization with heat exchange, opening of combustion chamber injection component. The objective of this set of high pressure reservoirs is to be a self-standing subsystem that always maintains a continuous flow of gaseous reactant (11) to the reaction chamber (1) independently of the propellant tank size and operating pressure.

The embodiments described are examples to illustrate the possible configuration of the invention, and do not limit it in any way. For example, in another embodiment, the invention may be configured as an air-breathing ramjet engine, in which the fuel is pressurized in its reservoir and fed to the reaction chamber using the means and devices described in the current invention. Alternatively air-breathing may have other uses than just propellant combustion; a single combustion chamber may have several DeLaval nozzles defining the line of a plug nozzle, and, in this case collected atmospheric air is injected in between the DeLaval nozzles exit area and from the surface of the plug nozzle, the objective being to use the exhaust products of reaction heat to expand the air injected through the plug in order to increase efficiency by having more mass for momentum exchange.

This invention may be used in both mono-propellant and bi-propellant propulsion system, or even with a greater number of different reactants. Furthermore, if a reactant that can exothermally decompose is used, such as for example nitrous oxide, in order to avoid detonation, several injection nozzles bellow a critical diameter should be used to ensure that a detonation wave cannot propagate back through the said nozzles into the tubing system. Also in between the said injection nozzles and the tanks a buffer component can exist wherein the reactant is bubbled through an inert liquid in order to ensure that any decomposition wave is stopped there.

Furthermore, in combination or as an independent solution, nitrous oxide could be mixed with ammonia or carbon dioxide or other inert compound(s) or element(s) with similar vapour pressure versus temperature curve in order to stabilize it against detonation, in the case of carbon dioxide (or another oxidized fuel and thus considered inert compound) and in combination with a hybrid engine, whenever possible, and in order to improve performance the fuel grain should include a metal powder that combusts with the said stabilizer(s) namely carbon dioxide or other compound.

## Claims

1. A propulsion system which uses at least one fluid reactant comprising a reaction chamber (1) suitable for a chemical reaction to take place, a nozzle (2), at least one reservoir (3) for storage of said at least one fluid reactant, and a feeding system comprising piping, wherein:
- the reservoir (3) is separated from the reaction chamber (1) and nozzle (2); the system being further **characterised in that**
- the piping comprises a piping subsystem which in turn consists of a heat exchanger (5), suitable for the fluid reactant to flow through and which is so arranged that:
∘ it is adjacent to the reaction chamber (1) and nozzle (2), being so arranged that it cools said reaction chamber (1) and nozzle (2) while being heated;
∘ the fluid reactant exits it going back to the reservoir (3);
- the reservoir (3) is so arranged that it feeds the reaction chamber (1) with fluid reactant in gaseous form;
- the reaction chamber (1) is suitable for being fed with fluid reactant in gaseous form and
- the reservoir further comprises a separation element (13) suitable for the separation between the gaseous and liquid phases of reactant in said reservoir (3).

2. A propulsion system according to claim 1 wherein it further comprises control valves, an igniter (8), in the reaction chamber.

3. A propulsion system according to claim 2 wherein said separation element (13) consists of a moving component, suitable for sliding along the reservoir so that a pressure balance between the liquid (10) and gas (11) phases of the fluid reactant is maintained, being a floating membrane or several independent floating elements that make a layer decreasing contact surface area and heat exchange between phases.

## Patentansprüche

1. Ein Antriebssystem, das mindestens einen fluiden Reaktanten verwendet, mit einer Reaktionskammer (1), die für eine ablaufende chemische Reaktion geeignet ist, einer Düse (2), mindestens einem Reservoir (3) zum Speichern für mindestens einem fluiden Reaktanten und einem Zuführsystem, das Rohrleitungen umfasst, wobei:
- das Reservoir (3) von der Reaktionskammer (1) und der Düse (2) getrennt ist; wobei das System weiterhin **dadurch gekennzeichnet ist,**
- **dass** die Rohrleitung ein Rohrleitungssubsystem umfasst, das wiederum aus einem Wärmetauscher (5) besteht, der für den Durchfluss des fluiden Reaktanten geeignet ist und so angeordnet ist, dass:
∘ es an die Reaktionskammer (1) und die Düse (2) grenzt, und so angeordnet ist, dass es die Reaktionskammer (1) und die Düse (2) kühlt, während sie erwärmt werden;
∘ der fluide Reaktant den Ausgang verlässt und zurück in das Reservoir (3) strömt;
- das Reservoir (3) ist so angeordnet, dass es die Reaktionskammer (1) mit fluiden Reaktanten in gasförmiger Form versorgt;
- die Reaktionskammer (1) ist dazu geeignet, mit Reaktanten in gasförmiger Form gespeist zu werden,
- und das Reservoir umfasst ferner ein Trennelement (13), das zur Trennung zwischen der gasförmigen und der flüssigen Phase des Reaktanten in dem Reservoir (3) geeignet ist.

2. Ein Antriebssystem nach Anspruch 1, bei dem es ferner Steuerventile und einen Zünder (8) in der Reaktionskammer aufweist.

3. Ein Antriebssystem nach Anspruch 2, bei dem das Trennelement (13) aus einer sich bewegenden Komponente besteht, die zum Gleiten entlang des Reservoirs geeignet ist, so dass ein Druckausgleich zwischen der Flüssigkeitsphase (10) und der Gasphase (11) des fluiden Reaktanten aufrechterhalten wird mittels einer schwebenden Membran oder mehrerer unabhängig schwebender Elemente, die eine Schicht bilden, die die Kontaktfläche und den Wärmeaustausch zwischen den Phasen verringert.

## Revendications

1. Un système de propulsion utilisant au moins un fluide réactif comprenant une chambre à réaction (1) adaptée au déroulement d'une réaction chimique,
une tuyère (2), au moins un réservoir (3) pour stockage du au moins un fluide mentionné plus haut, et un système d'alimentation contenant de la tuyauterie,
où:
- le réservoir (3) est séparé de la chambre à réaction (1) et de la tuyère (2); le système est de plus en ce que
- la tuyauterie comprend un sous-système de tuyauterie qui lui-même consiste en un échangeur de chaleur (5), adapté à ce que le fluide réactif coule à travers
et qui est arrangé de manière à ce que:
• il soit adjacent à la chambre à réaction (1) et la tuyère (2), arrangé de façon à ce qu'il refroidisse la chambre à réaction (1) et la tuyère (2) mentionnées pendant qu'il soit chauffé;
• le fluide réactif en sort retournant au réservoir (3);
- le réservoir (3) est arrangé de façon à alimenter la chambre à réaction avec du fluide réactif sous forme de gaz;
- la chambre à réaction (1) est adaptée à être alimentée avec du fluide réactif sous forme de gaz et
- le réservoir contient de plus un élément de séparation adapté à la séparation entre les phases liquides et gazeuses du réactif du dit réservoir (3).

2. Un système de propulsion selon la prétention 1 lequel contient de plus des vannes de contrôle, un allumeur (8), dans la chambre à réaction.

3. Un système de propulsion selon la prétention 2 dans lequel dit élément de séparation (13) consiste en une composante mobile, apte à glisser le long du réservoir
pour que la balance de la pression entre la phase liquide (10) et gazeuse (11) du fluide réactif est maintenu, qui est une membrane flottante ou plusieurs éléments flottants indépendant
qui forme une couche réduisant l'aire de la surface de contact et l'échange de chaleur entre les phases.
